# EUROPEAN PATENT SPECIFICATION

(11) **EP 3 917 860 B1**
(45) Date of publication and mention of the grant of the patent: **22.03.2023**
(21) Application number: 20725916.9
(22) Date of filing: 16.04.2020
(51) Int. Cl.: B65D 85/804

(54) **CAPSULE**
KAPSEL
CAPSULE

(30) Priority: 18.04.2019 IT 201900006046
(43) Date of publication of application: 08.12.2021
(73) Proprietor: Aroma System SRL, 40138 Bologna (IT)
(72) Inventor: RAPPARINI, Gino, 40138 Bologna (IT); GENERALI, Maurizio, 40138 Bologna (IT)
(74) Representative: Grünecker Patent- und Rechtsanwälte PartG mbB
(86) International application number: PCT/IB2020/053592
(87) International publication number: WO 2020/212892

(56) References cited:
- WO-A1-2010/128844
- WO-A1-2016/186488
- WO-A2-2007/137974

## Description

### TECHNICAL FIELD

The present invention relates to the field of capsules for beverages, and in particular the field of capsules comprising a sealing engagement for sealing an outer edge of the capsule to the dispensing device for preparing beverages, and the making thereof with injection or compression technology.

### BACKGROUND

Systems are known from the background art for preparing beverages, such as a coffee, which use an infusion device for providing a liquid under pressure, such as the water, to a capsule comprising a dose of a beverage ingredient, such as coffee.

The dispensing device commonly comprises a containment element for enclosing the capsule. During use, there is provided a sealing engagement between the capsule and the containment element so as to prevent liquid from leaking, for example water or beverage. The sealing engagement usually is obtained by pressing the capsule and the containment element against each other along a circumferential contact line.

For example, EP 2 303 077 A1 and WO 2007/137 974 describe a sealing engagement comprising a series of concentric, tapered circular ridges which are positioned along an upper surface of the projecting edge of the capsule.

However, although such system is seemingly capable of providing a seal between the capsule and the containment element, it would be desirable to find a more effective sealing engagement that is simpler to make.

In relation to the sealing effectiveness, the inventor has studied that the seal described in such patent document has disadvantages because the circular shape of the ridges may cause a relative movement between the capsule and the containment element, and therefore a relative sliding between the two elements. This is probably due to the fact that the circles have parallel tangential lines.

Moreover, the seal described in such document is clearly a barrier seal, i.e. a seal in which the fluid meets a series of barriers to overcome. If for example, the number of concentric circles were equal to three, the fluid would have three barriers. It will therefore be sufficient for the fluid to pass each of the three barriers in a specific point of the three barriers so as to overcome such seal.

Such solution is particularly disadvantageous and not highly reliable because small inaccuracies in the concentric ridges would be enough to run into a lack of seal.

Moreover, the process for making the circular ridges is not highly reliable because closed lines are involved, and therefore lines which are more difficult to make due to the difficulty in filling the end part of the capsule, and therefore the part intended for the seal. This is due to the fact that if it is not ejected outside with specific contrivances in the mould itself, the closed air trapped in the cavity of the mould more often than not creates shortcoming on the ridges, which are incomplete and therefore do not have a perfect seal.

Moreover, for the same reason, i.e. for the fact that such part is the last to be filled, the material arrives already cold and therefore less fluid.

Therefore, in light of that described above, the present invention deals with the problem of providing a sealing engagement which is more reliable and easier to make with respect to the one shown in the background art.

### SUMMARY

This problem is solved by a capsule according to claim 1.

The present invention is based on the idea of providing a capsule comprising a spiral-shaped ridge capable of providing a seal between the capsule and the containment element.

Within the scope of the present invention, unless otherwise specified the terms "above", "below", "lower", "upper" refer to the location of the various elements considering a section view of the capsule wherein the upper closing portion of the capsule occupies the highest level.

According to an embodiment of the present invention, a capsule for preparing a beverage is provided, comprising: a containment volume comprising a side wall and an upper closing portion which are configured so as to house a product in the containment volume; a projecting edge configured so as to project from the lower end of the containment volume along a perpendicular direction with respect to the axis of the containment volume, wherein the projecting edge comprises an upper surface facing the upper closing portion of the containment volume; wherein the lower surface of the projecting edge comprises a spiral-shaped ridge which winds about the axis of the capsule, performing a plurality of revolutions. This solution is particularly advantageous because firstly it allows an effective seal between the capsule and the containment element and secondly, it allows obtaining a simpler and more effective manufacturing method. In relation to the effectiveness of the seal, this is mainly due to the fact that the elliptic shape has a continuous line having tangent lines arranged in more scattered manner and with variable inclinations. Moreover, the advantage of the seal is also provided by the fact that the spiral line has a variable diameter in continuous manner, therefore having a continuous distribution of diameters and which is not discrete as instead occurs in EP 2 303 077 A1. Moreover, in relation to the manufacturing method, the step of filling the seal area is improved by means of the spiral shape, considering the more critical part, with respect to what occurs for the production method of the capsule described in EP 2 303 077 A1. Indeed, filling a spiral, which is a continuous path having substantially constant thickness, helps the flow of the melted material, allowing the end part of the capsule to be completed without leaving filling defects. The material in fact passes from the "thick" thickness of the wall, through the spiral, up to reaching the edge of the flange, in turn having "thick" thickness with respect to the seal area. Another advantage of the spiral is that with respect to the concentric circles, it extends in continuous manner over the entire surface of the projecting edge, therefore reinforcing the area and allowing the thickness of the flat area to be reduced. This advantage is significant in relation to the compostable materials which require thin thicknesses to facilitate the disintegration step. Moreover as explained in greater detail in the description, making the spiral-shaped ridge that winds about the axis of the capsule allows having a more effective seal because it is a pressure loss seal rather than a barrier seal, as instead described in EP 2 303 077 A1.

According to a further embodiment of the present invention, a capsule for preparing a beverage is provided, wherein the spiral-shaped ridge that winds about the axis of the capsule itself comprises an end portion positioned along the outer edge of the projecting edge of the containment volume. This solution is particularly advantageous because due to the fact that the projecting edge is interrupted on the opposite side of the end of the spiral, it is effectively possible to create a "tank" for the air or excess plastic and to facilitate achieving the thin thicknesses and avoid the creation of flashes outside the edge of the capsule due to the air bleeding outside the shape of the capsule. Moreover, an interruption on the outer edge only has an aesthetical disadvantage which is entirely negligible and does not create any type of malfunction.

According to a further embodiment of the present invention, a capsule for preparing a beverage is provided, wherein the spiral-shaped ridge has at least 5 revolutions about the axis of the containment volume, more preferably 6 revolutions about the axis of the containment volume.

According to a further embodiment of the present invention, a capsule for preparing a beverage is provided, wherein the spiral-shaped ridge has a pitch of 0.5 mm.

According to a further embodiment of the present invention, a capsule for preparing a beverage is provided, wherein said spiral-shaped ridge that winds about the axis of the capsule has a triangular section. This solution is particularly advantageous because in this manner, there are two inclined side surfaces that allow an effective deformation when subjected to pressure, for example when the capsule is pressed against the containment element.

According to a further embodiment of the present invention, a capsule is provided wherein the capsule is made of compostable material. This solution is advantageous because it allows having a sustainable capsule and avoiding useless waste.

According to a further embodiment of the present invention, a machine for making beverages with a capsule is provided according to one or more of the embodiments described above. Such machine comprises a containment element adapted to enclose the capsule and configured so that the seal between the capsule and the containment element itself is obtained by means of the interaction between a wall of the containment volume and the spiral-shaped ridge of the projecting edge. This solution is particularly advantageous given that the particular spiral shape of the ridge, which performs a plurality of revolutions about the axis of the capsule, allows an improved seal between the capsule itself and the containment element, and therefore ensures an improved operation of the machine for producing beverages. A system is provided for producing beverages, comprising a machine according to this embodiment and at least one capsule according to one or more of the embodiments described above.

### BRIEF DESCRIPTION OF THE DRAWINGS

The present invention is described with reference to the accompanying drawings in which the same reference numbers and/or marks indicate the same parts and/or similar parts and/or corresponding parts of the system.
Figure 1 diagrammatically shows a three-dimensional view of a capsule according to an embodiment of the present invention.
Figure 2 diagrammatically shows a section view of the capsule shown in figure 1, along a plane passing through the axis of the capsule.
Figure 2a diagrammatically shows a detail of the ridge shown in figure 2.
Figure 3 shows a section view along the line D-D of figure 2.
Figure 3a shows a detail of the ridge shown in figure 3.
Figure 4 shows a section view of the capsule inserted in the containment element prior to a relative pressure between the capsule and the containment element being applied.
Figures 4a and 4b describe details of figure 4.
Figure 5 shows a section view of the capsule inserted in the containment element after a relative pressure between the capsule and the containment element is applied.
Figures 5a and 5b describe details of figure 5.

### DETAILED DESCRIPTION

The present invention is described hereinbelow by making reference to particular embodiments, as illustrated in the accompanying drawings. However, the present invention is not limited to the particular embodiments described in the following detailed description and depicted in the drawings, rather the embodiments described simply exemplify the various aspects of the present invention, the scope of which is defined by the claims. Further modifications and variations of the present invention will be apparent to those skilled in art.

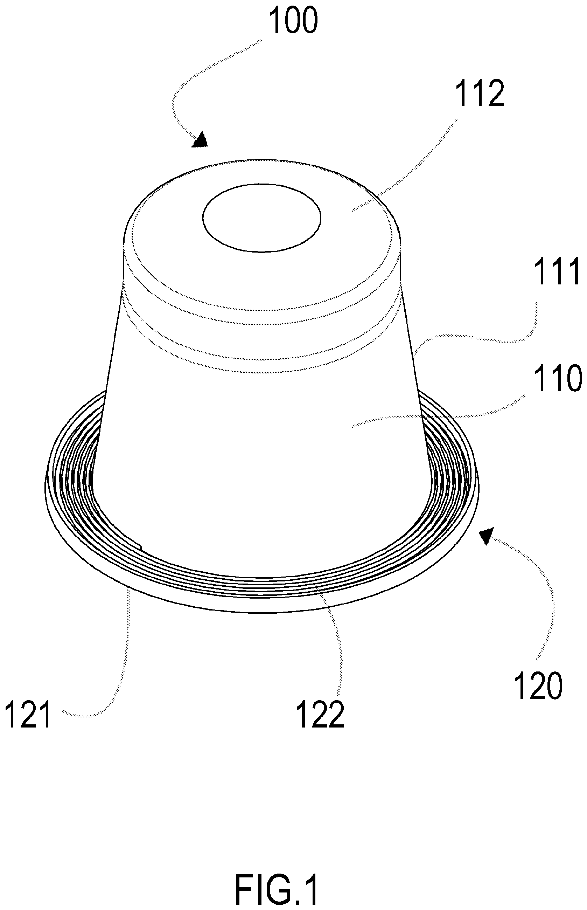

Figure 1 shows a three-dimensional view of a capsule 100 according to an embodiment of the present invention. As shown in the drawings, the capsule 100 comprises a containment volume 110 comprising a circumferential side wall 111 and an upper closing portion 112 provided integrally with the side wall 111.

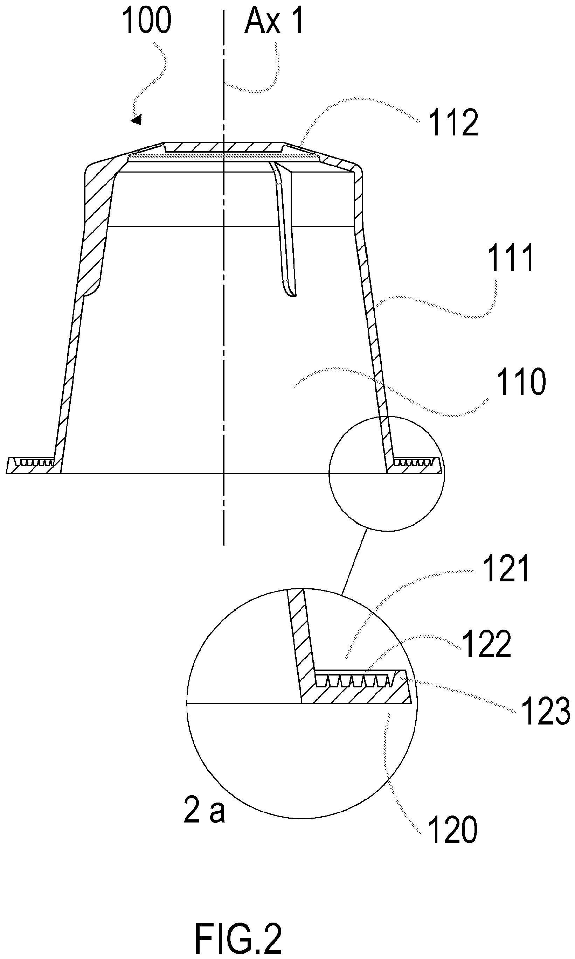

A projecting edge 120 is integrally provided to the containment volume 110 and is configured so as to project from the lower end of the containment volume 110, therefore at a portion opposite to the upper closing portion 112 of the containment volume 110 along a direction that is perpendicular to the axis Ax1 of the capsule 100 (shown in figure 2).

As shown in figure 1, the upper surface 121 of the projecting edge 120 comprises a spiral-shaped ridge 122, which is shown in greater detail in the following drawings. The ridge 122 extends along the perimeter of the side wall 111 of the containment volume 110 and performs a plurality of revolutions about the axis Ax1 of the capsule 100.

In order to fully understand one of the advantages provided by the spiral-shaped ridge 122, the difference between a barrier seal and a pressure loss seal is briefly presented below.

The barrier seal is a type of seal for example, in a flat seal element comprising one or more concentric ridges. Here, the seal is obtained from the various barriers formed by the concentric ridges themselves. For example, if there are two concentric ridges, a seal formed by two barriers is involved. If the liquid passed the first barrier in a point, it will be sufficient for it to pass the second barrier in a second point for there not to be any more seal.

As is well-known from physics, a liquid under pressure tends to expand towards areas having lower pressure. Therefore, in the case of a barrier seal, the fluid under pressure creates a pressure against the wall of the barrier itself and, if it is able to pass through it, it will be pressurized against the successive wall.

Therefore, it is sufficient to have two ridges with inaccuracies to lose the seal itself. For this reason, the present invention aims to solve such disadvantage and to make a more secure type of seal.

In this regard, the pressure loss seal described in the present invention, represented for example by the spiral-shaped ridge 122 of the present invention, has a completely different concept of seal.

The spiral-shaped ridge 122 allows the fluid to be channelled between two successive walls of the ridge 122. Therefore, the fluids tends to flow along such circumferential portion without pushing on the walls of the ridge 122 due to the fact that the outlet of the channel is the area with less pressure.

In this regard, as is well-known from fluid dynamics, a liquid that flows along a channel is subjected to distributed pressure losses that are dependent on the number of Reynolds, and to concentrated pressure losses due to particular shapes of specific points of the channel itself. The overall pressure losses are therefore proportional to the length of the channel and the shape of the channel, for example narrowings, steps and similar advantageously form the pressure losses.

Given that as mentioned, the fluid is channelled into the channel formed by two successive walls of the spiral-shaped ridge 122, it is to flow along a path, losing most of the pressure thereof up to stopping.

Therefore, taking advantage of the fact that the fluid is to perform a lengthy path prior to leaving the seal, it is possible to prevent it from reaching the outlet of the seal itself due to the pressure losses to which the fluid is subjected.

Figure 2 shows a section view of the capsule 100 shown in figure 1. As is shown in detail in figure 2a, the ridge 122 has a triangular section that extends about the perimeter of the side wall 111 and projects from the upper surface 121 of the projecting edge 120 towards the upper closing portion 112 of the capsule 100.

However, according to needs, the ridge may take on various shapes such as for example, a truncated-conical shape.

The pitch of the ridge 122 preferably is equal to 0.5 mm and the maximum width of the ridge 122 preferably is equal to 0.2 mm. The height of the ridge preferably is equal to 0.5 mm.

As shown in the drawing, the ridge 122 is integrally provided to the projecting edge 120 of the capsule 100 so as to make the capsule 100 in a single step.

As is shown in particular in figure 2a, the end portion of the projecting edge 120 has a protrusion 123 that extends from a radial end portion of the projecting edge 120 towards the upper closing portion 112 of the capsule 100 for a greater length with respect to the axial extension of the ridge 122.

In this regard, the distance measured along the axis Ax1 of the capsule 100 between the end portion of the protrusion 123 and the end portion of the ridge 122 preferably is equal to 0.2 mm.

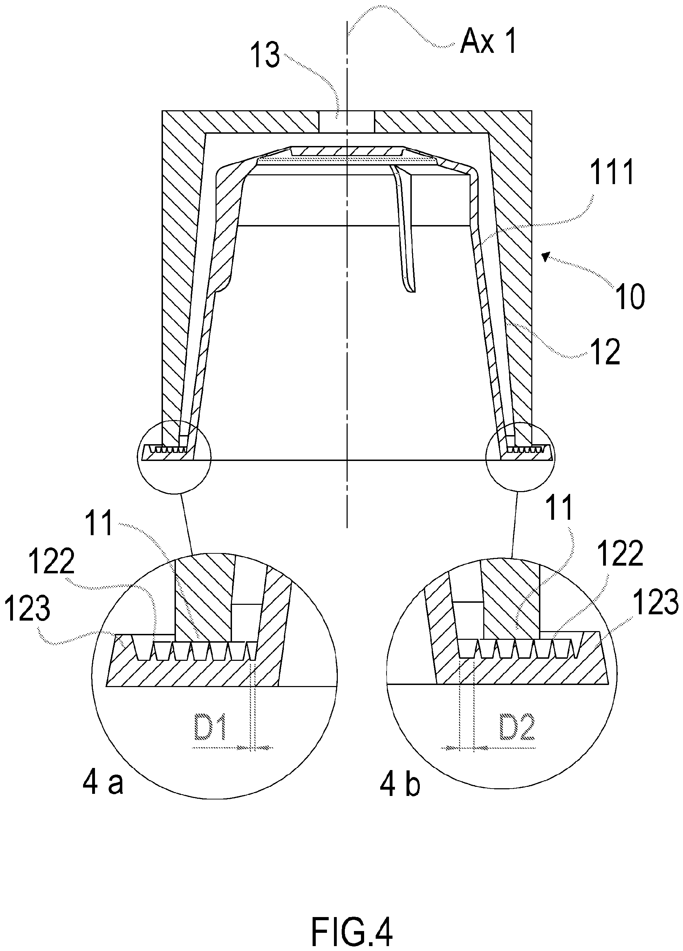

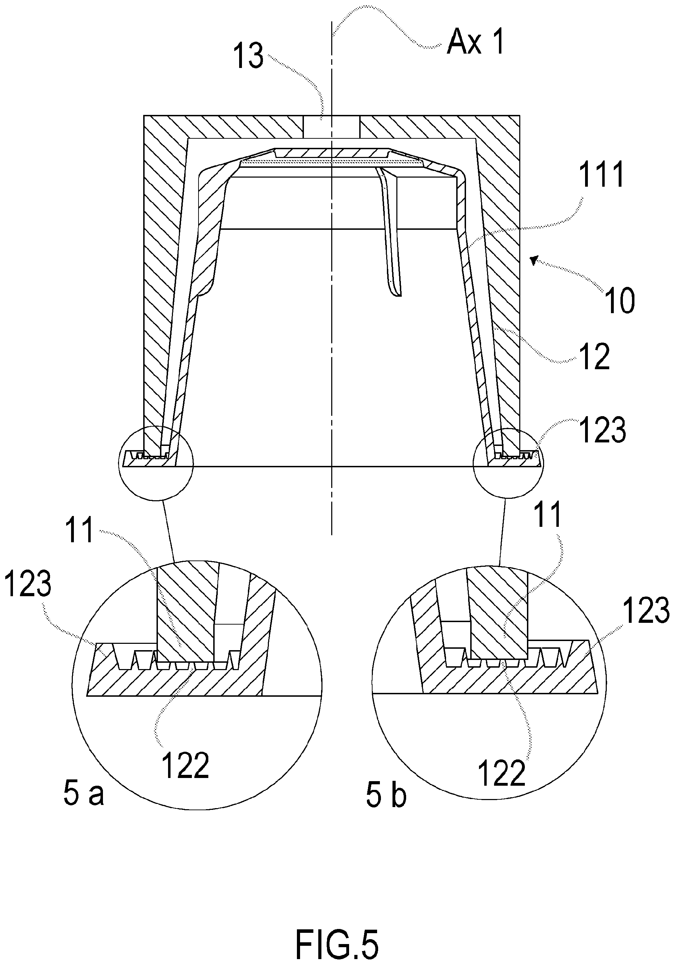

The function of the protrusion 123 is the one of interacting with an inner side wall 12 of the containment element of the infusion device, as is described more clearly with reference to figures 4 and 5.

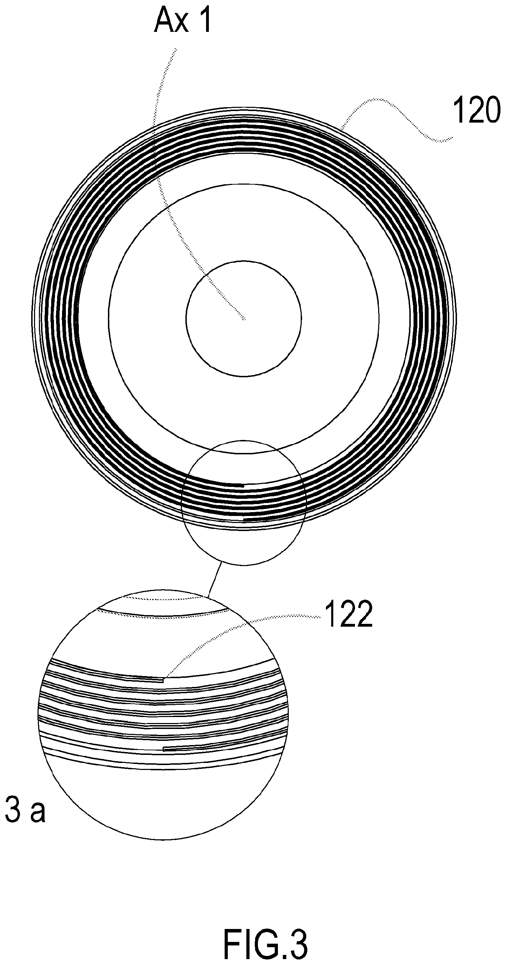

As shown in figure 3, the ridge 122 performs a plurality of revolutions about the axis Ax1 of the capsule 100. Preferably, the number of revolutions is greater than or equal to 5, more preferably equal to 6.

As shown in the detail of figure 3a, the circumferential start point of the ridge 122 coincides with the circumferential end point of the ridge 122. Although it is not shown in the drawings, according to a preferable embodiment, the spiral-shaped ridge 122 may comprise an end portion positioned along the outer edge of the projecting edge 120. Outer edge clearly means the outer end portion of the projecting edge 120.

The same inventive concept, i.e. the supply of a seal ridge 122 positioned along an upper surface of the projecting edge, may also be used for reinforcing rings such as the ones described in patent document EP 3 152 134 A1.

Moreover, the capsule 100 may preferably be made of a compostable material. Therefore, also the ridge 122 is made of compostable material.

As shown in figures 4 and 5, the capsule 100 described in the present invention may be used in dispensing devices, such as for example devices for preparing beverages such as coffee, comprising a containment element 10 configured so as to enclose the capsule 100. The containment element 10 comprises an opening 13 positioned in the upper portion of the containment element 10 so as to insert a perforating element capable of perforating the upper closing portion 112 of the capsule 100 and introduce liquid under pressure therein.

As shown in figure 4, during use, there is a sealing engagement between the capsule 100 and a lower wall 11 of the containment element so as to prevent liquid from leaking.

As mentioned above, the protrusion 123 allows interacting with an inner side wall 12 of the containment element 10 of the infusion device. This therefore allows adjusting the relative positioning between the capsule 100 and the containment element 10 so as to ensure that the lower wall 11 of the containment element 10 is in contact with at least one portion of the spiral-shaped ridge 122.

It is apparent from the example shown in the drawings that there is no need for the axis of the capsule to be centred with the axis of the containment element 10 because the spiral-shaped ridge 122 is in any case capable of providing a seal between the two elements.

Figure 4 shows a status that precedes the application of a relative pressure between the containment element 10 and the capsule 100. Therefore as is shown, there is a simple support between the spiral-shaped ridge 122 and the lower wall 11 of the containment element 10.

As is shown by comparing figures 4(a) and 4(b), the distance between the side wall 111 and the first ridge 122 varies between the section shown in figure 4(a) and the one shown in 4(b). In particular, the distance D1 between the inner portion of the ridge 122 and the side wall 111 shown in figure 4(a) is less than the distance D1 between the inner portion of the ridge 122 and the side wall 111 shown in figure 4(b). This is clearly due to the fact that the ridge 122 is spiral-shaped. Therefore, such distances continuously vary along the semi-circumference that joins the section shown in figure 4(a) and the one shown in 4(b).

Moreover, it is shown that in the particular example shown in figure 4, the lower wall 11 is in contact in three different points with the ridge 122, i.e. on three consecutive pitches of the ridge 122. Therefore, if the fluid under pressure wants to leave the seal, it is to perform at least three revolutions about the axis Ax1. This substantially is impossible due to the pressure losses in play that occur along such a long path. Thereby, a particularly reliable seal may be obtained.

Figure 5 shows a successive state to the one shown in figure 4. In particular, figure 5 shows a status wherein there is applied a relative pressure between the containment element 10 and the capsule 100.

As shown in the drawing, due to the pressure applied, the portion of the ridge 122 in contact with the lower wall 11 was crushed, becoming deformed. This firstly results in a greater contact portion between the ridge 122 and the lower wall 11 of the containment element 10 and secondly, a deformation of the channel, which therefore becomes smaller.

As is well-known from fluid dynamics, the distributed pressure losses are inversely proportional to the Reynolds number, i.e. inversely proportional to the average diameter of the channel.

Therefore, due to the pressure applied and therefore to the subsequent reduction of the section, there is an increase of the pressure loads which therefore decreases the pressure of the fluid and accordingly increases the reliability of the seal.

It is apparent that the seal is obtained by means of the ridge 122 of the capsule 100, which ridge is placed in direct contact with a wall of the containment element.

Although the present invention was described with reference to the embodiments described above, it is apparent to an expert in the field that it is possible to make several modifications, variants and improvements to the present invention in light of the above teaching and within the scope of the appended claims, without departing from the object and the scope of protection of the invention.

For example, although a contact was shown between the lower wall 11 of the containment element 10 and the capsule 100 at three different points of the ridge 122, i.e. on three consecutive pitches of the ridge 122, it is possible to create a contact with a different number of points, i.e. of consecutive pitches of the ridge 122, for example equal to 4, 5, or 6.

Finally, those fields known by experts in the field were not described to avoid excessively and uselessly overshadowing the invention described.

Accordingly, the invention is not limited to the embodiments described above, but is only limited by the scope of protection of the appended claims.

## Claims

1. A capsule (100) for preparing a beverage, comprising:
a containment volume (110) comprising a side wall (111) and an upper closing portion (112) which are configured so as to house a product in said containment volume (110);
a projecting edge (120) configured so as to project from a lower end of said containment volume (110), at a portion opposite to said upper closing portion (112) of said containment volume (110), said projecting edge (120) projecting along a direction that is perpendicular
with respect to an axis (Ax1) of symmetry of said capsule (100), wherein said projecting edge (120)
comprises an upper surface (121) facing the upper closing portion (112) of said containment volume (110);
said capsule (100) being **characterized in that**
said upper surface (121) of said projecting edge (120) comprises a spiral-shaped ridge (122) that performs a plurality of revolutions around said axis (Ax1) of said capsule (100).

2. A capsule (100) according to claim 1, wherein said spiral-shaped ridge (122) comprises an end portion positioned along the outer edge of said projecting edge (120).

3. A capsule (100) according to claim 1 or 2, wherein said ridge (122) has at least 5 revolutions about the axis of said capsule (100), more preferably 6 revolutions about the axis (Ax1) of said capsule (100).

4. A capsule (100) according to any one of claims 1 to 3, wherein said spiral-shaped ridge (122) has a pitch of 0.5 mm.

5. A capsule (100) according to any one of claims 1 to 4, wherein said spiral-shaped ridge (122) has a triangular section.

6. A capsule (100) according to any one of claims 1 to 5, wherein said capsule (100) is made of compostable material.

7. A machine for making a beverage, with a capsule (100) according to any one of claims 1 to 6, wherein said machine comprises a containment element (10) configured so as to enclose said capsule (100), wherein the seal between said capsule (100) and said containment element (10) is made by means of the interaction between a wall (11) of said containment volume and said spiral-shaped ridge (122) of said projecting edge (120).

8. A system for making a beverage, comprising a capsule (100) according to any one of claims 1 to 6, and a machine for making a beverage comprising a containment element (10) configured so as to enclose said capsule (100), wherein the seal between said capsule (100) and said containment element (10) is made by means of the interaction between a wall (11) of said containment volume and said spiral-shaped ridge (122) of said projecting edge (120).

## Patentansprüche

1. Kapsel (100) zum Zubereiten eines Getränks, die umfasst:
einen Einschlussraum (110), der eine Seitenwand (111) und einen oberen Verschlussabschnitt (112) umfasst, die so ausgeführt sind, dass sie ein Erzeugnis in dem Einschlussraum (110) aufnehmen;
einen vorstehenden Rand (120), der so ausgeführt ist, dass er von einem unteren Ende des Einschlussraums (110) an einem Abschnitt vorsteht, der dem oberen Verschlussabschnitt (112) des Einschlussraums (110) gegenüberliegt, wobei der vorstehende Rand (120) in einer Richtung vorsteht, die in Bezug auf eine Symmetrieachse (Ax1) der Kapsel senkrecht (100) ist, wobei der vorstehende Rand (120) eine obere Fläche (121) umfasst, die dem oberen Verschlussabschnitt (112) des Einschlussraums (110) zugewandt ist; und die Kapsel **dadurch gekennzeichnet ist, dass**
die obere Fläche (121) des vorstehenden Randes (120) eine spiralförmige Rippe (122) umfasst, die eine Vielzahl von Umläufen um die Achse (Ax1) der Kapsel (100) herum beschreibt.

2. Kapsel (100) nach Anspruch 1, wobei die spiralförmige Rippe (122) einen Endabschnitt umfasst, der entlang der Außenkante des vorstehenden Randes (120) angeordnet ist.

3. Kapsel (100) nach Anspruch 1 oder 2, wobei die Rippe (122) wenigstens fünf Umläufe um die Achse der Kapsel (100), vorzugsweise sechs Umläufe um die Achse (Ax1) der Kapsel (100), beschreibt.

4. Kapsel (100) nach einem der Ansprüche 1 bis 3, wobei die spiralförmige Rippe (122) eine Teilung von 0,5 mm aufweist.

5. Kapsel (100) nach einem der Ansprüche 1 bis 4, wobei die spiralförmige Rippe (122) einen dreieckigen Querschnitt hat.

6. Kapsel (100) nach einem der Ansprüche 1 bis 5, wobei die Kapsel (100) aus kompostierbarem Material besteht.

7. Maschine zum Bereiten eines Getränks mit einer Kapsel (100) nach einem der Ansprüche 1 bis 6, wobei die Maschine ein Einschlusselement (10) umfasst, das so ausgeführt ist, dass es die Kapsel (100) umschließt, und die Abdichtung zwischen der Kapsel (100) und dem Einschlusselement (10) durch die Wechselwirkung zwischen einer Wand (11) des Einschlussraums und der spiralförmigen Rippe (122) des vorstehenden Randes (120) erfolgt.

8. System zum Bereiten eines Getränks, das eine Kapsel (100) nach einem der Ansprüche 1 bis 6 sowie eine Maschine zum Bereiten eines Getränks umfasst, die ein Einschlusselement (10) umfasst, das so ausgeführt ist, dass es die Kapsel (100) umschließt, wobei die Abdichtung zwischen der Kapsel (100) und dem Einschlusselement (10) durch die Wechselwirkung zwischen einer Wand (11) des Einschlussraums und der spiralförmigen Rippe (122) des vorstehenden Randes (120) erfolgt.

## Revendications

1. Capsule (100) permettant de préparer une boisson, comprenant :
un volume de rétention (110) comprenant une paroi latérale (111) et un organe supérieur de fermeture (112) qui sont configurés de sorte à accueillir un produit dans ledit volume de rétention (110),
une bordure saillante (120) configurée de sorte à dépasser de l'extrémité inférieure dudit volume de rétention (110) au niveau d'une partie opposée au dit organe supérieur de fermeture (112) dudit volume de rétention (110), ladite bordure saillante (120) dépassant le long d'une direction qui est perpendiculaire à un axe (Ax1) de symétrie de ladite capsule (100), ladite bordure saillante (120) comprenant une surface supérieure (121) faisant face à l'organe supérieur de fermeture (112) dudit volume de rétention (110),
ladite capsule (100) étant **caractérisée en ce que** :
ladite surface supérieure (121) de ladite bordure saillante (120) comprend une nervure en forme de spirale (122) qui effectue une pluralité de révolutions autour dudit axe (Ax1) de ladite capsule (100).

2. Capsule (100) selon la revendication 1, dans laquelle ladite nervure en forme de spirale (122) comprend une extrémité positionnée le long de la bordure externe de ladite bordure saillante (120).

3. Capsule (100) selon la revendication 1 ou la revendication 2, dans lequel ladite nervure (122) présente au moins 5 révolutions autour de l'axe de ladite capsule (100), plus préférablement 6 révolutions autour de l'axe (Ax1) de ladite capsule (100).

4. Capsule (100) selon l'une quelconque des revendications 1 à 3, dans laquelle ladite nervure en forme de spirale (122) présente un pas de 0,5 mm.

5. Capsule (100) selon l'une quelconque des revendications 1 à 4, dans laquelle ladite nervure en forme de spirale (122) présente une section triangulaire.

6. Capsule (100) selon l'une quelconque des revendications 1 à 5, ladite capsule (100) étant constituée d'un matériau pouvant être composté.

7. Machine de confection d'une boisson comportant une capsule (100) conforme à l'une quelconque des revendications 1 à 6, ladite machine comprenant un élément de rétention (10) configuré pour enfermer ladite capsule (100), où le scellement entre ladite capsule (100) et ledit élément de rétention (10) est réalisée au moyen d'une interaction entre une paroi (11) dudit volume de rétention et ladite nervure en forme de spirale (122) de ladite bordure saillante (120).

8. Système de confection d'une boisson comprenant une capsule (100) conforme à l'une quelconque des revendications 1 à 6 et une machine de confection d'une boisson comprenant un élément de rétention (10) configuré pour enfermer ladite capsule (100), où le scellement entre ladite capsule (100) et ledit élément de rétention (10) est réalisée au moyen d'une interaction entre une paroi (11) dudit volume de rétention et ladite nervure en forme de spirale (122) de ladite bordure saillante (120).
